# EUROPEAN PATENT APPLICATION

(11) **EP 2 439 890 A1**
(43) Date of publication of application: **11.04.2012**
(21) Application number: 10785726.0
(22) Date of filing: 02.06.2010
(51) Int. Cl.: H04L 12/56

(54) **METHOD AND SYSTEM FOR PROCESSING MOBILE MULTIMEDIA DATA BROADCASTING SERVICE**

(30) Priority: 12.06.2009 CN 200910203768
(71) Applicant: ZTE Corporation, Shenzhen, Guangdong 518057 (CN)
(72) Inventor: WANG, Feng, Shenzhen Guangdong 518057 (CN)
(74) Representative: Manitz, Finsterwald & Partner GbR
(86) International application number: PCT/CN2010/073445
(87) International publication number: WO 2010/142213

(57) **Abstract**

The present invention discloses a method and a system for processing mobile multimedia data broadcasting services. The method comprises: distinguishing multiple paths of data services according to port numbers, and configuring a service-receiving unit (41), a service-sending unit (42) and a shared buffer (43) individually for each path of data service; wherein the processing for each path of data service comprises: said service-receiving unit (41) receiving data and storing the received data in the tail part of said shared buffer (43); and said service-sending unit (42) reading from the head part of said shared buffer said data and sending said data. The method and the system process the multipath of data services in mobile multimedia data broadcasting system in parallel so as to significantly improve the efficiency of processing services in time by the protocol wrapper and control delay time within the order of millisecond. In addition, the method and the system adopt congestion control mechanism, thus greatly reducing the data packet loss rate.

## Description

### Technical Field

The present invention relates to the field of mobile multimedia data broadcasting technology, and in particular, to a method and a system for processing mobile multimedia data broadcasting services.

### Background of the Related Art

In recent years, there has been a rapid development in digital mobile multimedia broadcasting technology and standard, such as the Digital Video Broadcast Handheld (DVB-H) of Europe, the Media Forward Link Only (MediaFLO) of the USA and the China Mobile Multimedia Broadcasting (CMMB) of China etc.

Data broadcasting is a value-added service of mobile multimedia broadcasting, which expands and enriches the content of mobile multimedia broadcasting services. The establishment of the data broadcasting standard is of great importance to drive the development of mobile multimedia broadcasting services. By means of point-to-multipoint broadcasting, data broadcasting transmits a variety of information contents, including videos, audios, texts, pictures, web-pages, software programs or other types of multimedia information data. Various information services, such as stock news, guidance on traffic, meteorological services, and website broadcasting and so on, can be provided to terminal users via data broadcasting services.

The data services of CMMB are classified into stream mode and file mode. the data services of stream mode are provided by the way of data stream, and the transmission of the data stream generally has a requirement on time sequence and a time label indication is included on transmission or synchronization is required internally for the data stream; while, the data services of the file mode are provided in the form of discrete files, and have no requirement about time sequence on the transmission of data.

The split-encapsulating syntax and the extensible Protocol Encapsulation (XPE)/eXtensible Protocol Encapsulation-Forward Error Correction (XPE-FEC) encapsulating syntax of the data files of the file mode are at different protocol hierarchies, and the data of the stream mode can be directly XPE/XPE-FEC encapsulated, so the data broadcasting services front end can utilize independent devices to complete data file generation and XPE encapsulation.

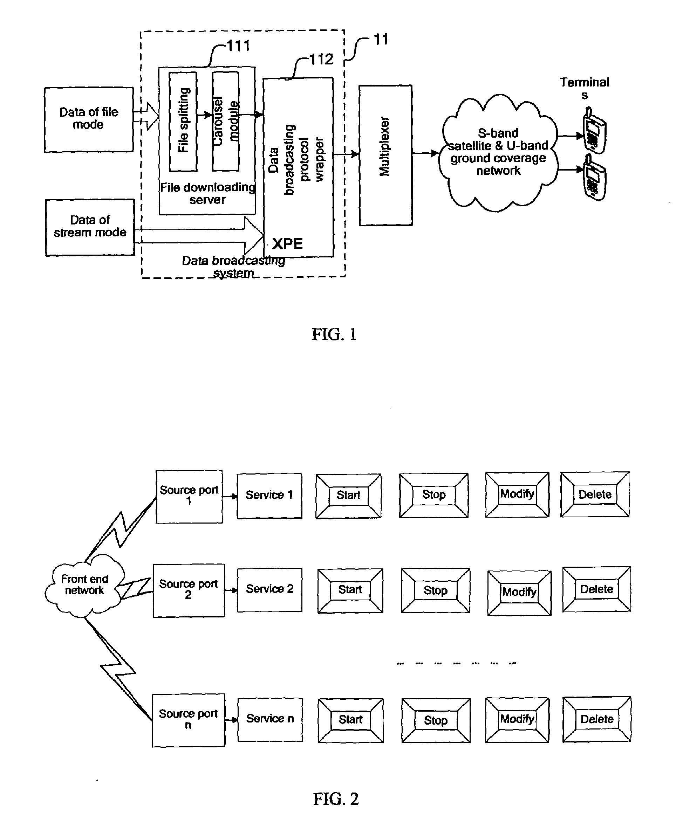

As shown in FIG. 1, it is a schematic diagram of the structure of the CMMB data broadcasting system, in which:

File downloading server 111 is used to process the data of the file mode received by CMMB data broadcasting system 11, implement the splitting and encapsulating of data files and make data broadcasting carousel toward data broadcasting protocol wrapper 112;

Data broadcasting protocol wrapper 112 is an expandable data encapsulation device that supports various types of protocols and a plurality of services, and is used to perform XPE/XPE-FEC encapsulation on stream data and split-encapsulated file data and adapt the encapsulated data into the data segments of multiplex subframes.

Data broadcasting protocol wrapper 112 is capable of simultaneously processing multiple paths of services, needs a real-time monitoring on each path of the service data and is required to timely process and send the data. So far there has not been a technical solution for implementing the processing on multiple paths of services.

Furthermore, in that process, the rate of a service source is variable, this may result in the loss of data packets. The current technology primarily applies window-based congestion control, such as the widely used transmission control protocol (TCP) and its several variations. The general processing is relatively complicated; as to the data broadcasting services with large data volume and strict requirement on real-time property, there needs a congestion control mechanism of User Data Protocol (UDP) having easy processing and high processing speed.

### Content of the Invention

The technical problem the present invention is to solve is to provide a method and a system for processing mobile multimedia data broadcasting services, providing a real-time and reliable data processing and a stable rate control for mobile multimedia broadcasting system.

To solve the above problem, the present invention provides a method for processing mobile multimedia data broadcasting services, said method comprises:
distinguishing multiple paths of data services according to port numbers, and configuring a service-receiving unit, a service-sending unit and a shared buffer individually for each path of data service, processing for each path of data service comprising:
said service-receiving unit receiving data and storing the received data into a tail part of said shared buffer, and
said service-sending unit reading from a head part of said shared buffer said data and sending said data.

The above method may have the following features:
in the step of said service-receiving unit receiving data and storing the received data into a tail part of said shared buffer:
said service-receiving unit sets a maximum buffer length, reads after the data are received occupied buffer length of said shared buffer, updates according to data length of the received data currently occupied buffer length, and judges whether a difference between the said maximum buffer length and the updated occupied buffer length is less than a critical value; if yes, increases said maximum buffer length and distributes buffer space for said received data after the data are successfully received;
after the step of said service-sending unit reading from a head part of said shared buffer said data and sending said data, the method further comprises:
if said service-sending unit has successfully sent the data, deleting the data from said shared buffer and updating the currently occupied buffer length.

The above method may have the following features:
the step of said service-receiving unit storing the received data into a tail part of said shared buffer comprises: establishing a first-in first-out (FIFO) shared queue pointer in said shared buffer, and storing the received data into a tail of said shared queue;
the step of said service-sending unit reading from a head part of said shared buffer said data and sending said data comprises: reading from a head of said shared queue said data and sending said data.

The above method may have the following features:
in the step of increasing said maximum buffer length, if the increasing of said maximum buffer length fails, a pointer of the head of said shared queue is moved back, and after a memory occupied by elements corresponding to the head of the shared queue is deleted, the currently occupied buffer length is updated.

The above method may have the following features:
a length of said critical value is at least greater than one Maximum Transmission Unit (MTU).

The above method may have the following features:
said service-receiving unit and said service-sending unit implements data synchronization by locking said shared buffer.

The present invention also provides a system for processing mobile multimedia data broadcasting services, comprising a service-receiving unit, a service-sending unit and a shared buffer, said service-receiving unit comprising a data-receiving module and a buffer-distributing module, said service-sending unit comprising a data-processing module and a data-sending module, wherein:
said data-receiving module is configured to distinguish multiple paths of data services according to port numbers, receive data of one path of data service of said multiple paths of data services, and send the received data to said buffer-distributing module;
said buffer-distributing module is configured to store the received data to a tail part of said shared buffer;
said data-processing module is configured to read data from a head part of said shared buffer, verify forward error correction (FEC) encoding indication for the read data, judge whether to perform FEC encoding on the data or not according to whether there is the FEC encoding indication, encapsulate the verified data and send the encapsulated data to said data-sending module;
said data-sending module is configured to send the encapsulated data to a destination address.

The above system may have the following features:
said buffer-distributing module is configured to create a first-in first-out (FIFO) shared queue pointer in said shared buffer and store the received data into a tail of said shared queue; and
said data-processing module is configured to read data from a head of said shared queue and sending the data.

The above system may have the following features:
said buffer-distributing unit is further configured to set a maximum buffer length, read after the data are received occupied buffer length of said shared buffer, update currently occupied buffer length according to data length of the received data, and judge whether a difference between said maximum buffer length and the updated occupied buffer length is less than a critical value whose length is at least greater than one Maximum Transmission Unit; if yes, increase said maximum buffer length and distribute buffer space for the received data after the data are successfully received; and
said data-sending module is further configured to delete after the data are successfully sent the data from said shared buffer and update the currently occupied buffer length.

The above system may have the following features:
said buffer-distributing unit is configured to: move a pointer of a head of said shared queue if the increasing of said maximum buffer length fails, and update the currently occupied buffer length after deleting a memory occupied by elements corresponding to the head of the shared queue. In conclusion, by processing multipath service in parallel in CMMB data broadcasting system, the present invention significantly improves the efficiency of processing services in real time by the protocol wrapper and controls delay time within the order of millisecond; furthermore, the present invention significantly reduces the data packet loss rate by adopting congestion control mechanism in CMMB data broadcasting system.

In addition, the preferred embodiments of the present invention improve the utilization ratio of memory by distributing buffer in real time and releasing memory in time after processing; and further reduce the data packet loss by verifying the occupied buffer before distributing the buffer and ensure no data packet loss in most cases. The present invention adopts thread mechanism for processing and is convenient and reliable in implementation; additionally, the protocol wrapper system provided by the present invention is realized by B/S framework, which facilitates the users in managing services and congestion control.

### Brief Description of Drawings

FIG. 1 is a schematic diagram of the structure of the CMMB data broadcasting system;
FIG. 2 is a schematic diagram of a system for processing multiple paths of services using the data broadcasting protocol wrapper according to an embodiment of the present invention;
FIG. 3 is a schematic diagram of managing and controlling a single service using the data broadcasting protocol wrapper according to an embodiment of the present invention;
FIG. 4 is a schematic diagram of a system for processing a single service using data broadcasting protocol wrapper according to an embodiment of the present invention;
FIG. 5 is a flow chart of the data broadcasting protocol wrapper performing congestion control according to an embodiment of the present invention.

### Preferred Embodiments of the present invention

The core idea of the present invention is that multiple paths of services are distinguished according to source ports and each path of service is separately processed; i.e., each path of service has its own service-receiving unit and service-sending unit, and the service-receiving unit and the service-sending unit operate in parallel; furthermore, the present invention provides a buffer for each path of service respectively, and the buffered data is shared in the service-receiving unit and the service-sending unit; the shared buffer space is distributed in real time to control the congestion so as to improve memory utilization ratio and reduce data packet loss.

Specifically, the present invention adopts the following technical solution to process each path of service:
the service-receiving unit receives the stream data or split-encapsulated file data of each path of service according to port numbers and stores the data into the buffers;
the service-sending unit reads data from the buffers, performs XPE/XPE-FEC encapsulation according to whether to perform forward error correction (FEC) encoding, and sends the encapsulated data to a destination address;
wherein, the destination address is configured and stored in a database by a service-managing portal;
further, the service-receiving unit intercepts the source pots by a blocking way to distinguish each path of service;
wherein, the blocking way refers to that the socket is established by a blocking way; in the blocking way, when a program is invoking a receiving function (for example, recv), if no data arrive, the function will wait, i.e., the current thread is blocked, until data arrive, when the function makes a return;
further, the service-sending unit reads data from buffers according to service sending rate (i.e., it reads data according to the bandwidth of services; for instance if the service bandwidth is 128kbps, it reads not more than 128kbit of data packets per second from memory), verifies indication variables for each data packet that is read to determine whether it is necessary to perform a FEC encoding, and performs FEC encoding for the data packets in the buffers if the indication is FEC encoding and then performs XPE-FEC encapsulation for the encoded data; wherein there is no need to put the encoded data and the XPE-FEC encapsulated data in the buffers; the XPE-FEC encapsulated source data is firstly sent and the corresponding XPE-FEC encapsulated encoded data is sent subsequently. In the current CMMB data broadcasting, FEC applies RS (Reed-Solomon) encoding (RS is a particular algorithm, which can implement FEC encoding) algorithm, and the data packets obtained by XPE-FEC encapsulating the encoded data are shorter than those obtained by XPE encapsulating the encoded data;
further, the service-receiving unit and the service-sending unit implement the data synchronization between each other by locking the shared data region.

The present invention further provides a method for controlling the congestion in mobile multimedia data broadcasting system, wherein the congestion is controlled based on service processing; the method comprises the following steps of:
the service-receiving unit verifying the occupied buffer length, applying for buffer space for the received data, and storing the received data in the tail of the shared buffer;
the service-receiving unit setting a maximum buffer length, reading after the data are received the occupied buffer length of said shared buffer, updating the currently occupied buffer length according to the data length of the received data, and then judging whether the difference between said maximum buffer length and the updated occupied buffer length is less than a critical value; if yes, increasing said maximum buffer length and after the maximum buffer length is increased successfully, distributing buffer space for the received data;
the service-sending unit reading data from the head of the shared buffer according to service sending rate, and if the data are successfully sent, releasing data buffer and updating the occupied buffer length.

The specific embodiments of the present invention will be further described with reference to accompanying figures taking the protocol wrapper in CMMB data broadcasting for an example.

In the method of service processing of the embodiments of the present invention, the detailed steps of the flow of processing a single service are as follows:
step 101, the service-receiving unit periodically monitoring the source port by a blocking way, storing data when receiving the data, and recording the data length;
step 102, the service-sending unit reading data from shared queue in sequence according to service sending rate; determining whether to perform FEC encoding on each read data packet; encoding the data packet by FEC algorithm if FEC encoding is required, performing XPE encapsulation on the source data packet, performing XPE-FEC encapsulation on the encoded data, and sending the data packets that have been XPE/XPE-FEC encapsulated to a destination address; performing XPE encapsulation on the read data packet and sending the encapsulated data packet to a destination address if FEC encoding is not required.

By processing service data in the service-sending unit rather than in the service-receiving unit, the utilization ratio of system resource and the processing speed are greatly improved.

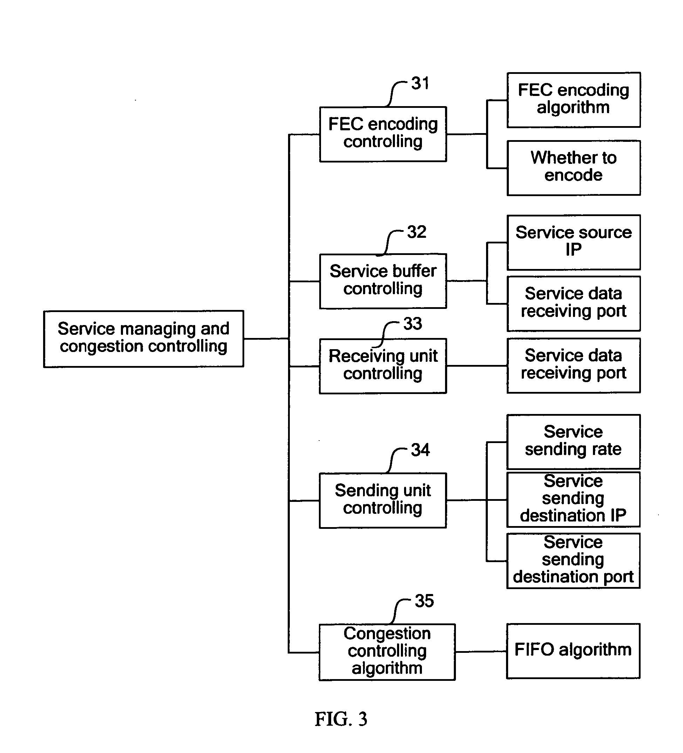

The service-processing system provided by an embodiment of the present invention is as shown in FIG. 2, wherein for the services in the file mode, the front end network refers to a file-generating system, and for the services in stream mode, the front end network may be the systems of stock, traffic guidance and so on. The service-processing system of this embodiment has the following features:
a. The data broadcasting protocol wrapper adopts B/S framework, service processing and congestion controlling can be managed by portal, the portal can be realized by using JAVA, and the communication between the portal and background is implemented by database and internal messages. Users only need to be familiar with the portal to a small extend to conveniently control the services;
b. Multiple paths of services are managed through portal, and multiple paths of services are distinguished according to source ports. Each path of service is individually processed, and the service can be started, stopped, modified and deleted;
c. Each service can be provided with congestion control through portal, mainly by modifying the parameters of service processing and congestion controlling. As shown in FIG. 3, the service processing and congestion controlling specifically comprises FEC encoding controlling 31, service buffer controlling 32, receiving unit controlling 33, sending unit controlling 34 and congestion controlling algorithm 35, wherein the functions of the procedures are as follows:

The procedure of FEC encoding controlling comprises judging whether to perform FEC encoding and choosing FEC encoding algorithm;

The procedure of service buffer controlling provides the modification to the maximum length of the buffer of the current service;

The procedure of receiving unit controlling provides the configuration on service data receiving ports and service source addresses;
wherein the service data receiving port refers to the destination port of the file data or stream data to be received sent by the front end network, and the service source address may be a local address or the multicasting address sent by the front end network;

The procedure of sending unit controlling provides the configuration on service sending rate, service sending destination IP and service sending destination port;
wherein the destination IP and the destination port are the address and the port configured in a multiplexer, and the multiplexer receives corresponding service data according to the destination IP and the destination port of the service.

In the procedure of congestion controlling algorithm, a control algorithm can be selected. Currently, the First-In First-Out (FIFO) algorithm is provided.

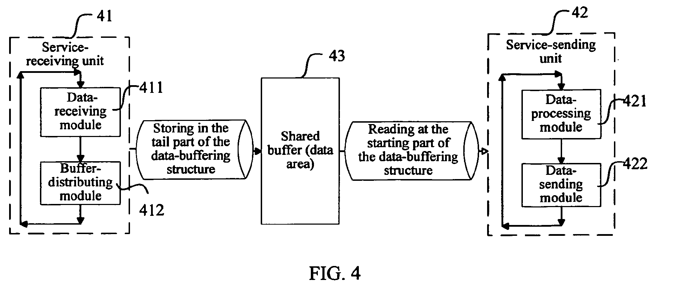

FIG. 4 shows a schematic diagram of a system for processing a single service using the data broadcasting protocol wrapper of an embodiment of the present invention. The system comprises a service-receiving unit 41, a service-sending unit 42 and a shared buffer 43, wherein the service-receiving unit 41 further comprises a data-receiving module 411 and a buffer-distributing module 412, and said service-sending unit 42 further comprises a data-processing module 421 and a data-sending module 422. The primary functions of each module are as follows:

The data-receiving module is configured to distinguish multiple paths of data services according to port numbers, receive in real time the data of one path of data service, and send the received data to the buffer-distributing module;

Buffer-distributing module is configured to store the received data into the tail part of the shared buffer;

The data-processing module is configured to read data from the head part of the shared buffer, verify FEC encoding indication for the read data, judge whether to perform FEC encoding on the data or not according to whether there is FEC encoding indication, encapsulate the verified data and then send the data to the data-sending module;

The data-sending module is configured to send the encapsulated data to a destination address.

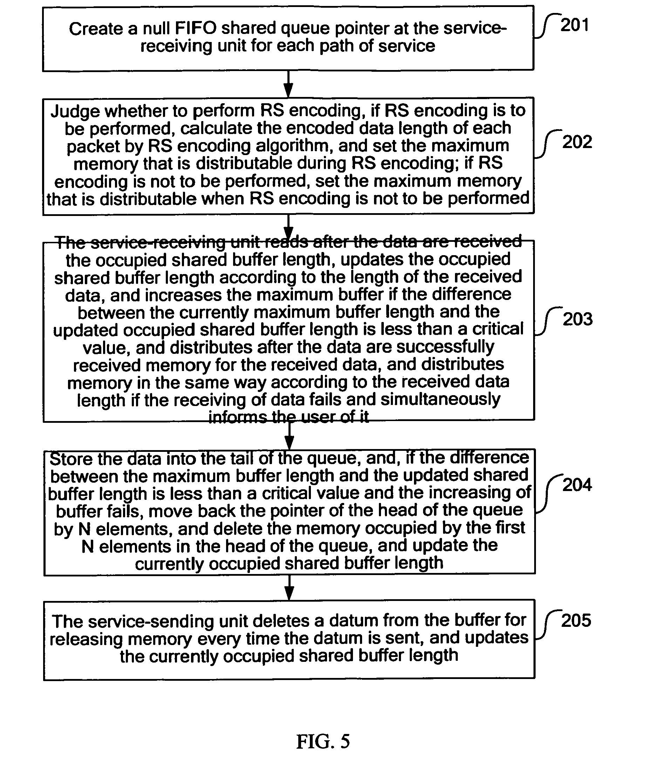

FIG. 5 illustrates the flow of the protocol wrapper performing congestion control during service processing in CMMB data broadcasting, and the specific steps are as follows:
step 201, for each path of service, create a null FIFO shared queue pointer at the service-receiving unit;
step 202, judge whether to perform RS (Reed-Solomon) encoding (RS is a particular algorithm, which can realize FEC encoding), if RS encoding is to be performed, calculate the encoded data length of each packet according to RS encoding algorithm, and set the maximum memory that is distributable when RS encoding is to be performed; if RS encoding is not to be performed, set the maximum memory that is distributable when RS encoding is not to be performed;
wherein the maximum memory distributable (i.e., the maximum buffer length) is configured by the system, and each path of service should be individually configured with the maximum buffer length; the maximum buffer length can be configured according to the practically available memory size and the maximum number of parallel services, the default of the maximum buffer length can be read from the configuration file, and the particular configuration can be modified via portals and databases. For example, the length of one data packet shall not be greater than a Maximum Transmission Unit (MTU) and is usually 1024 or 512 bytes, so the default of the maximum buffer length can be set as 2M, which is able to buffer 2000 packets if one packet is 1024 bytes;
step 203, the service-receiving unit reads after the data are received the currently occupied length of the shared buffer, and updates the occupied shared buffer length according to the data length of the received data; if the difference between the currently maximum buffer length and the updated occupied shared buffer length is less than a critical value (the critical value shall be at least greater than one MTU), the maximum buffer is increased, wherein the increased length is configurable and shall generally be greater than one MTU, and after the data are successfully received, memory is distributed for the received data, and if the receiving of data fails, memory is distributed in the same way according to the received data length and simultaneously informs the user of it;
step 204, store the data to the tail of the queue, and, if, in step 203, the difference between the maximum buffer length and the new shared buffer length is less than a critical value and the increasing of buffer fails, move back the pointer of the head of the queue by N elements (N is but not limited to a positive multiple of 10), delete the memory occupied by the first N elements in the head of the queue, and update the currently occupied shared buffer length;
step 205, the service-sending unit deletes a datum from the buffer to release the memory every time after the datum is sent, and updates the currently occupied shared buffer length.

As can be seen from the above content, by applying the method of service processing of the present invention, real-time and stable processing and transmission of service data can be guaranteed.

Furthermore, besides the CMMB system, the method of the present invention is also applicable to other mobile multimedia broadcasting systems.

Those having ordinary skills in the art will appreciate that all or part of the steps of the methods of the above embodiments can be implemented by instructing related hardware by programs; said programs can be stored in a computer readable storage medium, and when the programs are executed, the steps of the embodiments of the above methods are included; said storage mediums are, for example, disc, optical disk, Read-Only Memory (ROM) or Random Access Memory (RAM) and so on.

The above are only the preferred embodiments of the present invention and are not intended to limit the present invention. For those having ordinary skills in the art, a variety of modifications and variations may be made to the present invention, and any modifications, equivalent replacement and improvements made within the spirit and principle of the present invention shall be deemed as being fallen into the protection scope thereof.

### Industrial Applicability

The method and system for processing mobile multimedia data broadcasting services provided by the present invention apply multipath service parallel processing so as to significantly improve the efficiency of processing services in real time by the protocol wrapper and control the delay time within the order of millisecond; furthermore, the present invention applies the congestion control mechanism, and thereby improving memory utilization ratio and significantly reducing the loss rate of data packets.

## Claims

1. A method for processing mobile multimedia data broadcasting services, said method comprising:
distinguishing multiple paths of data services according to port numbers, and configuring a service-receiving unit, a service-sending unit and a shared buffer individually for each path of data service, processing for each path of data service comprising:
said service-receiving unit receiving data and storing the received data into a tail part of said shared buffer; and
said service-sending unit reading from a head part of said shared buffer said data and sending said data.

2. The method according to claim 1, wherein in the step of said service-receiving unit receiving data and storing the received data into a tail part of said shared buffer:
said service-receiving unit sets a maximum buffer length, reads after the data are received occupied buffer length of said shared buffer, updates according to data length of the received data currently occupied buffer length, and judges whether a difference between the said maximum buffer length and the updated occupied buffer length is less than a critical value; if yes, increases said maximum buffer length and distributes buffer space for said received data after the data are successfully received;
after the step of said service-sending unit reading from a head part of said shared buffer said data and sending said data, the method further comprises:
if said service-sending unit has successfully sent the data, deleting the data from said shared buffer and updating the currently occupied buffer length.

3. The method according to claim 2, wherein
the step of said service-receiving unit storing the received data into a tail part of said shared buffer comprises: establishing a first-in first-out (FIFO) shared queue pointer in said shared buffer, and storing the received data into a tail of said shared queue;
the step of said service-sending unit reading from a head part of said shared buffer said data and sending said data comprises: reading from a head of said shared queue said data and sending said data.

4. The method according to claim 3, wherein in the step of increasing said maximum buffer length,
if the increasing of said maximum buffer length fails, a pointer of the head of said shared queue is moved back, and after a memory occupied by elements corresponding to the head of the shared queue is deleted, the currently occupied buffer length is updated.

5. The method according to any one of claims 2 to 4, wherein
a length of said critical value is at least greater than one Maximum Transmission Unit (MTU).

6. The method according to any one of claims 1 to 4, further comprising:
said service-receiving unit and said service-sending unit implementing data synchronization by locking said shared buffer.

7. A system for processing mobile multimedia data broadcasting services, comprising a service-receiving unit, a service-sending unit and a shared buffer, said service-receiving unit comprising a data-receiving module and a buffer-distributing module, said service-sending unit comprising a data-processing module and a data-sending module, wherein:
said data-receiving module is configured to distinguish multiple paths of data services according to port numbers, receive data of one path of data service of said multiple paths of data services, and send the received data to said buffer-distributing module;
said buffer-distributing module is configured to store the received data to a tail part of said shared buffer;
said data-processing module is configured to read data from a head part of said shared buffer, verify forward error correction (FEC) encoding indication for the read data, judge whether to perform FEC encoding on the data or not according to whether there is the FEC encoding indication, encapsulate the verified data and send the encapsulated data to said data-sending module;
said data-sending module is configured to send the encapsulated data to a destination address.

8. The system according to claim 7, wherein
said buffer-distributing module is configured to create a first-in first-out (FIFO) shared queue pointer in said shared buffer and store the received data into a tail of said shared queue; and
said data-processing module is configured to read data from a head of said shared queue and sending the data.

9. The system according to claim 8, wherein
said buffer-distributing unit is further configured to set a maximum buffer length, read after the data are received occupied buffer length of said shared buffer, update currently occupied buffer length according to data length of the received data, and judge whether a difference between said maximum buffer length and the updated occupied buffer length is less than a critical value whose length is at least greater than one Maximum Transmission Unit; if yes, increase said maximum buffer length and distribute buffer space for the received data after the data are successfully received; and
said data-sending module is further configured to delete after the data are successfully sent the data from said shared buffer and update the currently occupied buffer length.

10. The system according to claim 9, wherein
said buffer-distributing unit is configured to: move a pointer of a head of said shared queue if the increasing of said maximum buffer length fails, and update the currently occupied buffer length after deleting a memory occupied by elements corresponding to the head of the shared queue.
